(19) Europäisches Patentamt
European Patent Office
Office européen des brevets

(11) **EP 4 744 832 A1**

(12) **EUROPÄISCHE PATENTANMELDUNG**

(43) Veröffentlichungstag:
**20.05.2026 Patentblatt 2026/21**

(21) Anmeldenummer: 24213230.6

(22) Anmeldetag: **15.11.2024**

(51) Internationale Patentklassifikation (IPC):
**B25D 1/00** (2006.01)   **H02M 1/44** (2007.01)

(52) Gemeinsame Patentklassifikation (CPC):
**H02M 1/44; B25F 5/00; H02M 7/5387;** B25D 11/00;
B25D 2250/091

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Hilti Aktiengesellschaft
9494 Schaan (LI)**

(72) Erfinder:
• **Hurka, Florian
86459 Margertshausen (DE)**
• **Scherbaum, Markus
86853 Gennach (DE)**
• **Rehorik, Kilian
97082 Würzburg (DE)**

(74) Vertreter: **Hilti Aktiengesellschaft
Corporate Intellectual Property
Feldkircherstrasse 100
Postfach 333
9494 Schaan (LI)**

(54) **ANTRIEBSEINHEIT FÜR EINE MOBILE WERKZEUGMASCHINE**

(57)   Es wird eine Antriebseinheit für eine mobile Werkzeugmaschine vorgeschlagen, aufweisend eine Akkueinheit zum Bereitstellen einer ausgangsseitigen Gleichspannung, einen Elektromotor, und eine Schalteinrichtung, die zwischen der Akkueinheit und dem Elektromotor geschaltet ist, und durch die die ausgangsseitige Gleichspannung zum Steuern des Elektromotors schaltbar ist, wobei die Schalteinrichtung mindestens zwei Schalter aufweist, die jeweils mit einer Schaltfrequenz von größer gleich 50 kHz, bevorzugt von größer gleich 100 kHz, geschaltet werden sind.

Fig. 1

**Beschreibung**

GEBIET DER ERFINDUNG

Die vorliegende Erfindung betrifft eine Antriebseinheit für eine mobile Werkzeugmaschine und eine mobile Werkzeugmaschine mit einer solchen Antriebseinheit.

Eine Schalteinrichtung zum Betreiben eines elektrischen Motors in einer mobilen Werkzeugmaschine wird mit einer Gleichspannung versorgt, die oftmals von einem leistungsstarken Akku bereitgestellt wird.

Dabei kommen in modernen mobilen Werkzeugmaschinen immer leistungsstärkere Akkus zum Einsatz. Die Leistungsfähigkeit dieser Akkus ist nach wie vor maßgeblich durch deren Innenwiderstand begrenzt. Je niedriger der Innenwiderstand ausfällt, desto weniger Wärme und damit Leistungsverluste entstehen innerhalb des Akkus, wodurch höhere Leistungen bzw. elektrische Ströme aus dem Akku entnommen werden können. Mit sinkenden Innenwiderständen entstehen jedoch neuartige Probleme.

Der Akku eines standardmäßigen Antriebsstrangs einer mobilen Werkzeugmaschine besitzt nämlich bei hochfrequenten Anregungen parasitäre Eigenschaften, die mit sinkendem Innenwiderstand des Akkus nicht mehr zu ignorieren sind. Dabei zeigt ein solcher Akku unter anderem parasitäre, induktive Eigenschaften. Die parasitäre Induktivität und ein oftmals verwendeter Zwischenkreiskondensator des Antriebsstrangs bilden dabei gemeinsam einen sogenannten LC-Schwingkreis.

Die Resonanzfrequenz dieses LC-Schwingkreises kann wie folgt berechnet werden:

$$f_{resonanz} = \frac{1}{2\pi\sqrt{L_{Akku}C_{Akku}}}$$

Dabei weisen die Akkus heutiger mobile Werkzeugmaschinen (inkl. der elektrischen Leitungen bzw. Anbindungen) eine Induktivität von ca. 200 nH auf. Typische Zwischenkreiskapazitäten sind mit 200 μF anzugeben. Auf Basis dieser Werte ergibt sich eine Resonanzfrequenz von 25 kHz. Diese Resonanzfrequenz liegt jedoch genau im Bereich einer üblichen Taktung einer Puls-Weiten-Modulation (PWM) einer Motorinverterbrücke. Diese PWM-Frequenz wirkt für den LC-Schwingkreis somit als resonante Anregung. Die entstehenden Schwingungen können dabei die Elektronik des Akkus (unter anderem eines Batterie-Managements) zerstören bzw. beeinflussen zumindest analoge Messungen während der Motorregelung negativ.

Des Weiteren sorgen diese Schwingungen dafür, dass in dem Akku zusätzliche Verluste entstehen, da der an sich gleich gerichtete Akkustrom mit einem Wechselstromanteil überlagert ist, der lediglich Verluste in dem Akku erzeugt, ohne eine zusätzliche Leistung im Antriebsstrang bereitzustellen.

An sich wirkt ein Innenwiderstand des Akkus dämpfend auf den LC-Schwingkreis. Je größer der Innenwiderstand des Akkus somit ist, desto geringer ist die Amplitude im Resonanzfall. Dieser positive Effekt, der durch den an sich ungewünschten Innenwiderstand des Akkus entsteht, wird allerdings durch den immer weiter sinkenden Innenwiderstand in modernen Akkus kontrastiert. Somit soll hier auf anderer Art und Weise einer Resonanz entgegengewirkt werden.

Vor diesem Hintergrund besteht die Aufgabe der vorliegenden Erfindung, eine verbesserte Antriebseinheit für eine mobile Werkzeugmaschine und/oder eine verbesserte mobile Werkzeugmaschine zu schaffen.

OFFENBARUNG DER ERFINDUNG

Gemäß einem ersten Aspekt wird eine Antriebseinheit für eine mobile Werkzeugmaschine vorgeschlagen. Die Antriebseinheit weist eine Akkueinheit zum Bereitstellen einer ausgangsseitigen Gleichspannung, einen Elektromotor zum Antreiben eines Werkzeuges der mobilen Werkzeugmaschine und eine Schalteinrichtung auf. Die Schalteinrichtung ist zwischen der Ackueinheit und dem Elektromotor geschaltet. Durch die Schalteinrichtung wird die ausgangsseitige Gleichspannung zum Steuern des Elektromotors geschaltet bzw. ist die ausgangsseitige Gleichspannung zum Steuern des Elektromotors schaltbar. Die Schalteinrichtung weist mindestens zwei Schalter auf, die jeweils mit einer Schaltfrequenz von größer gleich 50 kHz, bevorzugt von größer gleich 100 kHz, schaltbar sind bzw. geschaltet werden.

Die Akkueinheit ist vorzugsweise dazu ausgebildet, eine Gleichspannung (DC) zu liefern. Die Akkueinheit bildet vorzugsweise einen wesentlichen Bestandteil der Antriebseinheit und wird zur Energieversorgung des Elektromotors verwendet. Die Akkueinheit weist vorzugsweise mindestens zwei oder mehr Kontakte bzw. Kontaktpunkte auf. Diese Kontakte sind vorzugsweise Verbindungspunkte, über die die elektrische Energie von der Akkueinheit an die Antriebseinheit übertragen wird. Die Akkueinheit ist vorzugsweise ein wiederaufladbarer Energiespeicher bzw. eine wiederaufladbare Batterie, der/die elektrische Energie speichern und bei Bedarf wieder abgeben kann.

Durch die vorgeschlagene Antriebseinheit wird die Anregungsfrequenz (PWM-Frequenz) der Schalteinrichtung derart angehoben, dass es nicht mehr zu einer parasitären Anregung der Akkueinheit kommt. Die vorliegenden Schalter sind dabei derart ausgebildet, dass sie geringe Schaltverluste aufweisen. Diese Schaltverluste sind dabei direkt proportional mit der Schaltfrequenz. Um Probleme mit einem resultierenden Wärmeeintrag durch die Schalter zu vermeiden, werden vorliegend besonders schnell schaltende Schalter verwendet, was eine grundlegende Neuerung gegenüber bestehenden Antriebseinheiten für mobile Werkzeugmaschinen darstellt, in denen bislang Silizium-basierte Transistoren als Schalter verwendet werden. Durch die schnell schaltenden Schalter kann eine höhere PWM-Frequenz verwendet werden, wodurch der kritische Resonanzbereich des Akku-Zwischenkreis-Schwingkreises verlassen wird. Durch die Erhöhung der PWM Frequenz werden Motor-Strom-Rippel kleiner und die Effizienz verbessert.

Gemäß einem zweiten Aspekt wird eine mobile Werkzeugmaschine mit einer derartigen Antriebseinheit vorgeschlagen.

Die mobile Werkzeugmaschine kann ein handgeführtes Elektrowerkzeug bzw. eine mobile Werkzeugmaschine, beispielsweise eine Bohrmaschine, eine Schraubmaschine, eine Mei-βelmaschine, eine Schleifmaschine, eine Sägemaschine oder dergleichen sein. Denkbar ist auch, dass die mobile Werkzeugmaschine ein Bauroboter ist oder einen Bauroboter umfasst. Die mobile Werkzeugmaschine kann einen Manipulator, insbesondere einen mehrachsigen Manipulator, aufweisen. Die mobile Werkzeugmaschine kann eine Antriebsvorrichtung zum Antrieb eines Werkzeugs, beispielsweise eines Bohrers, eines Meißels, eines Saugers oder dergleichen aufweisen.

Die mobile Werkzeugmaschine kann beispielsweise zur Bearbeitung von Stein, wie Beton, und/oder Metall und/oder Holz eingerichtet sein. Sie kann beispielsweise zum Bohren, Mei-βeln, Sägen und / oder Schleifen ausgebildet sein.

Allgemein kann die mobile Werkzeugmaschine zur Ausführung von Arbeiten im Hoch- und/oder Tiefbau eingerichtet sein. Denkbar ist, dass sie nicht für einen Einsatz im Bergbau eingerichtet ist.

Die mobile Werkzeugmaschine kann tragbar sein; sie kann beispielsweise ein Gewicht von weniger als 50 kg, insbesondere von weniger als 25 kg, aufweisen.

Die für die Antriebseinheit gemachten Ausführungen gelten für die mobile Werkzeugmaschine entsprechend und umgekehrt.

In einer Ausführungsform wird vorgeschlagen, dass die Schalteinrichtung eine Motorinverterbrücke, insbesondere einen Spannungsquellenwechselrichter, ausbildet, die die durch die Akkueinheit bereitgestellte Gleichspannung beispielsweise mittels einer Puls-Weiten-Modulation in eine Wechselspannung taktet, durch die der Elektromotor antreibbar ist.

Die Schalteinrichtung bildet also vorzugsweise eine Motorinverterbrücke, die als Spannungsquellenwechselrichter (Gate-Source-Inverter, GSI) fungiert. Dabei wird die Gleichspannung, die von der Akkueinheit bereitgestellt wird, vorzugsweise mithilfe einer Pulsweitenmodulation in Wechselspannung umgewandelt. Diese getaktete Wechselspannung ermöglicht es, den Elektromotor anzutreiben. Die Pulsweitenmodulation sorgt für die präzise Steuerung der Ausgangsspannung und -frequenz, wodurch die Leistungsabgabe des Elektromotors effizient reguliert werden kann.

In einer Ausführungsform wird vorgeschlagen, dass zwischen der Akkueinheit und der Schalteinrichtung, insbesondere in Parallelschaltung, eine Zwischenkreiskapazität geschaltet ist.

Die Zwischenkreiskapazität wird allgemein auch als Zwischenkreis bezeichnet. Durch die schnell schaltenden Schalter, die in der Schalteinrichtung verwendet werden, wird der Zwischenkreis nicht mehr zum Schwingen angeregt. Die Zwischenkreiskapazität wird in einem Antriebsstrang mit Akkueinheit und Schalteinrichtung in Parallelschaltung eingesetzt, um Spannungsschwankungen zu glätten und stabile Betriebsbedingungen sicherzustellen. Die Akkueinheit kann beispielsweise plötzliche Laständerungen nicht immer direkt und schnell ausgleichen, daher puffert die Zwischenkreiskapazität Energie und versorgt die Schalteinrichtung (zum Beispiel den Wechselrichter) bei Bedarf mit zusätzlicher Energie. Dies reduziert Spannungsspitzen und schützt die Komponenten vor Schäden durch hohe Ströme. Gleichzeitig unterstützt die Zwischenkreiskapazität die Pulsweitenmodulation, indem sie schnelle Stromschwankungen abfedert, was die Effizienz und Lebensdauer des gesamten Systems erhöht. Je nach Schaltung kann jedoch auf die Zwischenkreiskapazität ggf. verzichtet werden, weshalb dieses als optional aufzufassen ist. Eine hohe Zwischenkreiskapazität hat jedoch den Nachteil, dass diese mit hohen (Material-)Kosten, einer Erhöhung des Bauraums, und einer Verminderung der Robustheit verbunden ist.

In einer Ausführungsform wird vorgeschlagen, dass die Zwischenkreiskapazität eine nominelle Kapazität von kleiner 500 μF, bevorzugt von kleiner 450 μF aufweist.

Die nominelle Kapazität des Zwischenkreises bzw. eines Zwischenkreiskondensators, bezeichnet vorzugsweise die elektrische Energiemenge, die der Kondensator speichern kann, und wird vorzugsweise in Farad (F) angegeben. Diese nominelle Kapazität bestimmt, wie viel Energie im Zwischenkreis gepuffert werden kann und wie effektiv Spannungsschwankungen geglättet werden. Eine höhere Kapazität ermöglicht vorzugsweise eine bessere Abfederung von Spannungsspitzen und Stromschwankungen, die durch Lastwechsel in der Schalteinrichtung oder im Elektromotor entstehen. Die nominelle Kapazität ist vorzugsweise so ausgelegt, dass der Zwischenkreis bei schnellen Laständerungen ausreichend Energie liefern oder aufnehmen kann, um stabile Spannungsverhältnisse zu gewährleisten.

In einer Ausführungsform wird vorgeschlagen, dass die Zwischenkreiskapazität einen keramischen Kondensator, MLCC, aufweist.

Bevorzugt wird der Hauptanteil der Kapazität des Zwischenkreises durch einen keramischen Kondensator bereitgestellt. Besonders bevorzugt sind beispielsweise mindestens 60 %, vorzugsweise 75 % der Gesamtkapazität des Zwischenkreises durch einen keramischen Kondensator abgedeckt. Ferner können noch Tantal- und/oder Elektrolyt-Kondensatoren eingesetzt werden.

Ein keramischer Kondensator ist eine Art elektrischer Kondensator, der Keramik als dielektrisches Material verwendet. Diese Kondensatoren umfassen vorzugsweise dünne Keramikschichten, die mit Metallfolien als Elektroden abwechselnd geschichtet sind. Keramische Kondensatoren sind aufgrund ihrer hohen Stabilität, Temperaturbeständigkeit und Kapazität in einem kompakten Format eingesetzt. MLCC steht für Multilayer Ceramic Capacitor (auf Deutsch: Vielschicht-Keramikkondensator). MLCCs sind eine spezielle Art keramischer Kondensatoren, die aus mehreren Schichten aus keramischem Material und Metall bestehen, die abwechselnd übereinander gestapelt und dann in einem kleinen, kompakten Gehäuse zusammengepresst werden. Diese Bauweise ermöglicht hohe Kapazitätswerte in einem kleinen Bauraum.

In einer Ausführungsform wird vorgeschlagen, dass die mindestens zwei Schalter jeweils als Halbleitermaterial-basierte Transistoren mit einem Bandabstand des Halbleitermaterials von größer 3 eV ausgebildet sind.

Mindestens einer der mindestens zwei Schalter kann als Gate-Terminal-Transistor, insbesondere als Metalloxid-Halbleiter-Feldeffekttransistor, und/oder als 3-Terminal-Transistor, insbesondere als High-Electron-Mobility Transistor, ausgebildet sein. Grundsätzlich sind auch andere, halbleiterbasierte Transistortypen, wie Gate-isolierte Bipolar-Transistoren (IG-BTs), einsetzbar.

Der Bandabstand (auch als Bandlücke bezeichnet) ist vorzugsweise die erforderliche Energie, um ein Elektron aus dem Valenzband in das Leitungsband eines Halbleitermaterials zu fördern. Als Halbleitermaterialien kommen beispielsweise Beta-Galliumoxid ($\beta$-$Ga_2O_3$) oder Gallium-Nitrid (GaN) zum Einsatz. Beta-Galliumoxid ($\beta$-$Ga_2O_3$) hat einen Bandabstand von etwa 4,8 bis 4,9 eV. Beta-Galliumoxid ist ein ultrabreitbandiger Halbleiter. Gallium-Nitrid (GaN) hat einen Bandabstand von etwa 3,4 eV.

In einer Ausführungsform wird vorgeschlagen, dass die mindestens zwei Schalter jeweils als Gallium-Nitrit-Transistoren ausgebildet sind.

Die Fähigkeit Gallium-basierter Schalter, schnell (d.h., gleich oder kleiner als 20 Nanosekunden) schalten zu können und dabei geringere Schaltverluste zu erzeugen, macht sie besonders attraktiv für Anwendungen, bei denen eine hohe Schalteffizienz und Schaltleistung entscheidend sind, wie beispielsweise der vorliegenden Antriebseinheit. Die Gallium-basierten Schalter ermöglichen es im Vergleich zu Silizium-basierten Schaltern wesentlich schneller zu schalten.

In einer Ausführungsform wird vorgeschlagen, dass die Akkueinheit eine Zellenanordnung aus mehreren Zellen, insbesondere aus mehreren Batteriezellen, aufweist, wobei die Zellen jeweils einen Innenwiderstand bezogen auf die nominale Spannung der Akkueinheit von kleiner 1,4 mOhm/V, bevorzugt von kleiner 1,3 mOhm/V, besonders bevorzugt von kleiner 1,2 mOhm/V aufweisen.

Die nominale Spannung einer Akkueinheit ist vorzugsweise die Spannung, die die Akkueinheit unter normalen Betriebsbedingungen typischerweise liefert. Sie ist vorzugsweise ein durchschnittlicher Spannungswert, der sich aus der chemischen Zusammensetzung der Zellen und ihrer seriellen Verschaltung ergibt. Für Akkueinheiten, die aus mehreren Zellen in Serie bestehen, addieren sich die Zellspannungen zur Gesamtspannung der Einheit. So hat eine Akkueinheit mit zehn in Serie geschalteten Zellen eine nominale Spannung von 10 Einzelzellen.

Wenn die Zellen beispielsweise einen Innenwiderstand bezogen auf die nominelle Spannung der Akkueinheit kleiner als 1,2 mOhm/V aufweisen, ist es bevorzugt, wenn die Schalter mit einer Frequenz von mindestens 50kHz geschaltet werden. Wenn nötig kann ferner eine Kapazität des Zwischenkreises erhöht und/oder ein Kondensatormaterial speziell ausgewählt werden, was mit zusätzlichen Kosten, zusätzlichen Bauteilen und mehr Bauraum verbunden ist, da die Oszillation bzw. Anregung des LC-Schwingkreises vornehmlich bei kleiner Kapazität des Zwischenkreises mit zugleich einem kleinen parasitären Serienwiderstand des Zwischenkreiskondensators auftritt. Dies ist insbesondere typisch für Keramikkondensatoren. Einige Kondensatormaterialien können auch die Brandgefahr erhöhen, oder Elektrolyte aufweisen, die einer schnellen Alterung unterliegen.

In einer Ausführungsform wird vorgeschlagen, dass die Zellen als Pouchzellen oder als Festkörperbatteriezellen ausgebildet sind.

Pouchzellen sind vorzugsweise flache Batteriezellen mit flexiblem Gehäuse aus Aluminium oder einem Aluminium-Kunststoff-Verbundmaterial. Diese Form ermöglicht eine hohe Energiedichte und gute Wärmeableitung und ist besonders platzsparend.

Festkörperbatteriezellen nutzen statt eines flüssigen Elektrolyten einen festen, was die Sicherheit erhöht und das Risiko von Bränden und Kurzschlüssen verringert. Sie bieten eine hohe Energiedichte und versprechen eine längere Lebensdauer sowie eine geringere Selbstentladung.

Die Pouchzellen und/oder Festkörperbatteriezellen weisen jeweils eine hohe Energiedichte auf. Ferner weisen die Pouchzellen und/oder Festkörperbatteriezellen einen geringen Innenwiderstand auf.

Vorliegend bezieht sich ein "Widerstand" auf einen ohmschen Widerstand. Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

KURZE BESCHREIBUNG DER FIGUREN

Die nachfolgende Beschreibung erläutert die Erfindung anhand von exemplarischen Ausführungsformen und Figuren. In den Figuren zeigt:

Fig. 1    eine schematische Ansicht einer akkubetriebenen mobilen Werkzeugmaschine;

Fig. 2    eine schematische Ansicht einer Antriebseinheit; und

Fig. 3    eine schematische Ansicht einer Antriebseinheit.

Gleiche oder funktionsgleiche Elemente werden durch gleiche Bezugszeichen in den Figuren indiziert, soweit nicht anders angegeben.

AUSFÜHRUNGSFORMEN DER ERFINDUNG

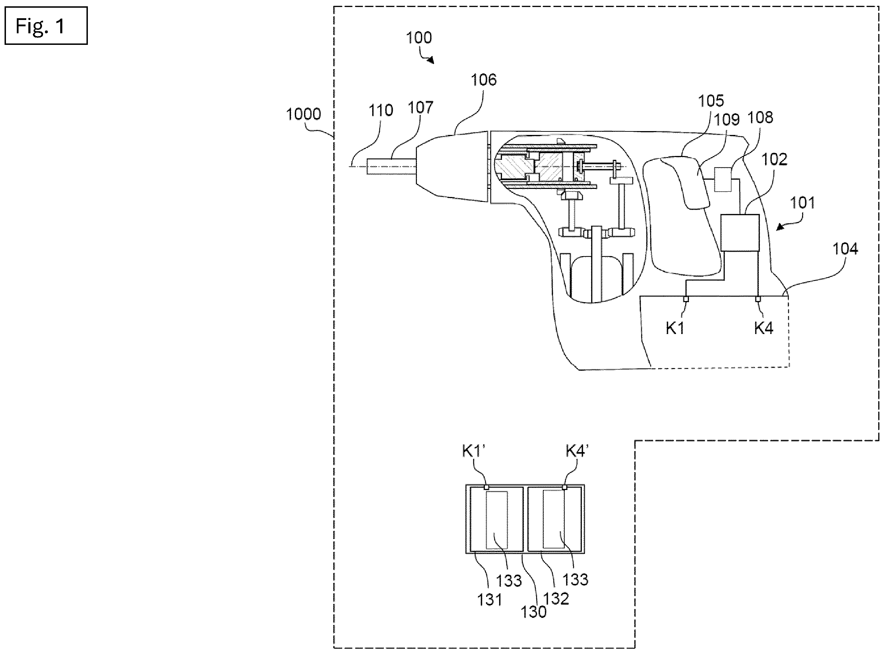

Fig. 1 zeigt eine schematische Ansicht einer akkubetriebenen mobilen Werkzeugmaschine 100, die hier als ein Schlagbohrer ausgeführt ist. Die mobile Werkzeugmaschine 100 weist eine Aufnahmebucht 104 auf, die in diesem Beispiel zwei Kontakte K1, K4 aufweist. Die Aufnahmebucht 104 ist zum Aufnehmen einer Akkueinheit 130 eingerichtet. In jedem Fall werden die zwei Kontakte K1, K4 der Aufnahmebucht 104 mit zwei korrespondierenden Kontakten K1', K4' der Akkueinheit 130 in Kontakt gebracht.

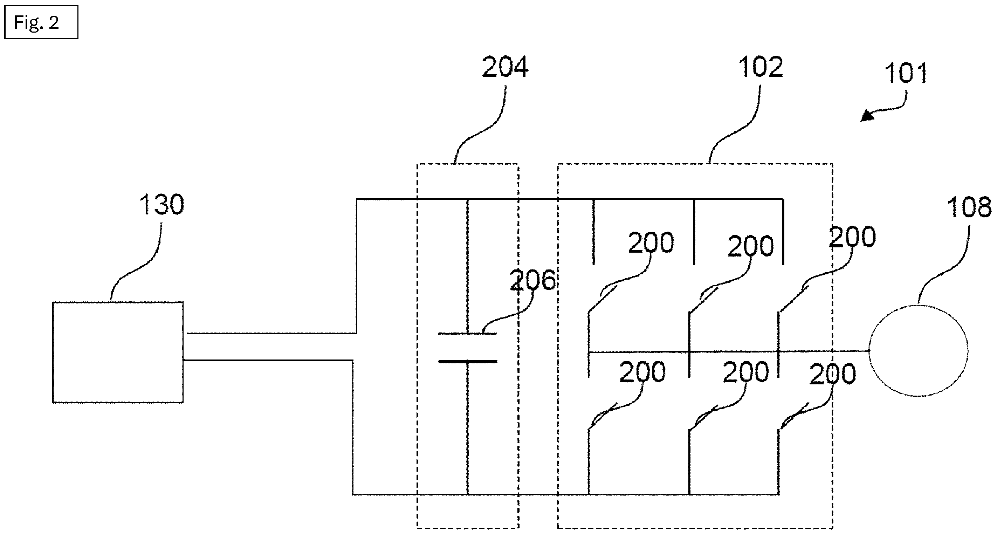

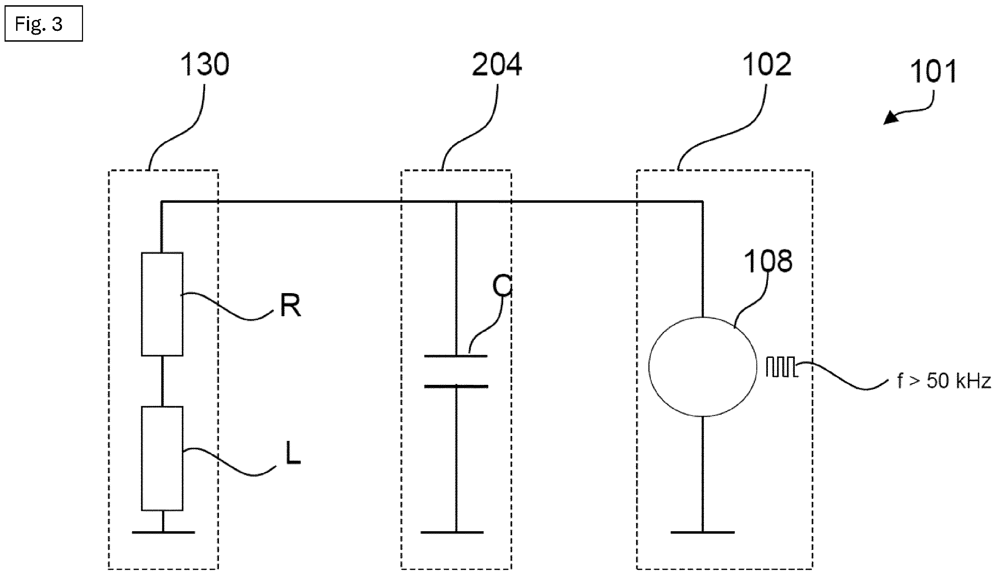

Zwischen den Kontakten K1 und K4 der Aufnahmebucht 104 ist ein Verbraucher der mobilen Werkzeugmaschine 101, insbesondere ein Elektromotor 108, geschaltet. In dem dargestellten Beispiel sind die Kontakte K1 und K4 mit einer Schalteinrichtung 102 verbunden, welche den Antriebsstrom für den Elektromotor 108 schaltet. Die Schalteinrichtung 102 und der Elektromotor bilden einen Teil einer elektrischen Antriebseinheit 101, die gemäß verschiedenen Ausführungsbeispielen näher in den Fig. 2 und 3 gezeigt ist.

Mit dem gestrichelten Kasten ist in der Fig. 1 rein beispielhaft ein System 1000 umfassend eine akkubetriebene mobile Werkzeugmaschine 100 und eine Akkueinheit 130 mit mehreren Zellenanordnungen 131, 132, jeweils umfassend Zellen 133, gekennzeichnet. Die Zellen 133 weisen jeweils einen Innenwiderstand R (siehe schematisch in Fig. 3) bezogen auf die nominale Spannung der Akkueinheit 130 von kleiner 1,4 mOhm/V, bevorzugt von kleiner 1,3 mOhm/V, besonders bevorzugt von kleiner 1,2mOhm/V auf. Die Akkueinheit 130 kann in einem vereinfachten Ersatzschaltbild als Reihenschaltung einer Induktivität L und dem (Innen- )Widerstand R dargestellt werden. Die Zellen 133 sind insbesondere als Pouchzellen oder als Festkörperzellen ausgebildet.

Die mobile Werkzeugmaschine 100 weist einen Hauptschalter 105 auf, über den die Antriebseinheit 101 ein- und ausschaltbar, und vorzugsweise eine Leistungsentnahme aus der Akkueinheit 130 und somit eine Antriebsleistung des Elektromotors regelbar ist.

Die mobile Werkzeugmaschine 100 weist ferner eine Werkzeugaufnahme 106 zur Aufnahme eines Bohrwerkzeuges 107 auf. Die mobile Werkzeugmaschine 100 kann mittels eines Handgriffs 109, an dem beispielsweise der Hauptschalter 105 angebracht ist, gehalten werden. Die Antriebseinheit 101 versetzt das Bohrwerkzeug 107 in Rotation um eine Antriebsachse 110.

Wie in Fig. 2 dargestellt, weist Schalteinrichtung 102 mindestens zwei Schalter 200 (vorliegend sechs Schalter 200) auf, die jeweils mit einer Schaltfrequenz von größer gleich 50 kHz, bevorzugt von größer gleich 100 kHz, schaltbar sind bzw. geschaltet werden. Zum Bereitstellen dieser hohen Schaltfrequenzen sind die mindestens zwei Schalter 200 jeweils als Halbleitermaterial-basierte Transistoren mit einem Bandabstand des Halbleitermaterials von größer 3 eV ausgebildet. Die mindestens zwei Schalter 200 sind beispielsweise jeweils als Gallium-Nitrit-Transistoren ausgebildet.

Die Schalteinrichtung 102 bildet eine Motorinverterbrücke 202, insbesondere einen Spannungsquellenwechselrichter, aus, die die durch die Akkueinheit 130 bereitgestellte Gleichspannung in eine Wechselspannung taktet, durch die der Elektromotor 108 antreibbar ist.

Zwischen der Akkueinheit 130 und der Schalteinrichtung 102 ist in Parallelschaltung eine Zwischenkreiskapazität 204 mit mindestens einem Zwischenkreiskondensator 206 geschaltet. Der Zwischenkreiskondensator 206 hat eine nominelle Kapazität C von kleiner 500 $\mu$F. Die Zwischenkreiskapazität 204 bzw. der mindestens eine Zwischenkreiskondensator 206 weist einen keramischen Kondensator, MLCC, auf. Durch die Kapazität C des Zwischenkreiskondensators 206 und die Akkueinheit 130, bzw. deren innere Induktivität L kann es je nach Anregungsfrequenz f zu einer Ausbildung eines LC-Schwingkreises kommen, der Verluste verursacht. Der Innenwiderstand R der Akkueinheit 130 wirkt dabei dämpfend auf den LC-Schwingkreis. Vorliegend kann eine derartige Anregung unterbunden werden, da die Schaltfrequenzen f der Schalter 200 jeweils mit größer gleich 50 kHz gewählt sind, was außerhalb der Resonanzfrequenz für den LC-Schwingkreis liegt.

BEZUGSZEICHENLISTE

| 100 | mobile Werkzeugmaschine |
|-----|-------------------------|
| 101 | Antriebseinheit |
| 102 | Schalteinrichtung |
| 104 | Aufnahmebucht |

| 105 | Hauptschalter |
| 106 | Werkzeugaufnahme |
| 107 | Bohrwerkzeug |
| 108 | Elektromotor |
| 109 | Handgriff |
| 110 | Arbeitsachse |
| 130 | Akkueinheit |
| 131 | Zellenanordnung |
| 132 | Zellenanordnung |
| 133 | Zelle |
| 200 | Schalter |
| 202 | Motorinverterbrücke |
| 204 | Zwischenkreiskapazität |
| 206 | Zwischenkreiskondensator |
| 1000 | System |
| | |
| f | Frequenz |
| K1 | Kontakt |
| K1' | Kontakt |
| K4 | Kontakt |
| K4' | Kontakt |
| R | ohmscher Widerstand |
| C | Kapazität |
| L | Induktivität |

**Patentansprüche**

1. Antriebseinheit (101) für eine mobile Werkzeugmaschine (100), aufweisend:

   eine Akkueinheit (130) zum Bereitstellen einer ausgangsseitigen Gleichspannung;
   einen Elektromotor (108); und
   eine Schalteinrichtung (102), die zwischen der Akkueinheit (130) und dem Elektromotor (108) geschaltet ist, und durch die die ausgangsseitige Gleichspannung zum Steuern des Elektromotors (108) schaltbar ist,
   wobei die Schalteinrichtung (102) mindestens zwei Schalter (200) aufweist, die jeweils mit einer Schaltfrequenz von größer gleich 50 kHz, bevorzugt von größer gleich 100 kHz, schaltbar sind.

2. Antriebseinheit (101) nach Anspruch 1, wobei die Schalteinrichtung (102) eine Motorinverterbrücke (202), insbesondere einen Spannungsquellenwechselrichter, ausbildet, die die durch die Akkueinheit (130) bereitgestellte Gleichspannung taktet, durch die der Elektromotor (108) antreibbar ist.

3. Antriebseinheit (101) nach Anspruch 1 oder 2, wobei zwischen der Akkueinheit (130) und der Schalteinrichtung (102) eine Zwischenkreiskapazität (204) geschaltet ist.

4. Antriebseinheit (101) nach Anspruch 3, wobei die Zwischenkreiskapazität (204) eine nominelle Kapazität (C) von kleiner 500 μF aufweist.

5. Antriebseinheit (101) nach Anspruch 3 oder 4, wobei die Zwischenkreiskapazität (204) einen keramischen Kondensator, MLCC, aufweist.

6. Antriebseinheit (101) nach einem der Ansprüche 1 bis 5, wobei die mindestens zwei Schalter (200) jeweils als Halbleitermaterial-basierte Transistoren mit einem Bandabstand des Halbleitermaterials von größer 3 eV ausgebildet sind.

7. Antriebseinheit (101) nach einem der Ansprüche 1 bis 6, wobei die mindestens zwei Schalter (200) jeweils als Gallium-Nitrit-Transistoren ausgebildet sind.

8. Antriebseinheit (101) nach einem der Ansprüche 1 bis 7, wobei die Akkueinheit (130) eine Zellenanordnung (131, 132) aus mehreren Zellen (133) aufweist, wobei die Zellen (133) jeweils einen Innenwiderstand (R) bezogen auf die nominale Spannung der Akkueinheit (130) von kleiner 1,4 mOhm/V, bevorzugt von kleiner 1,3 mOhm/V, besonders bevorzugt von kleiner 1,2 mOhm/V aufweisen.

9. Antriebseinheit (101) nach Anspruch 8, wobei die Zellen (133) als Pouchzellen oder als Festkörperbatteriezellen ausgebildet sind.

10. Mobile Werkzeugmaschine (100) mit einer Antriebseinheit (101) nach einem der Ansprüche 1 bis 9.

Fig. 1

Fig. 2

Fig. 3

101

102

108

f > 50 kHz

204

130

R

L

Europäisches
Patentamt

European
Patent Office

Office européen
des brevets

# EUROPÄISCHER RECHERCHENBERICHT

**Nummer der Anmeldung**

EP 24 21 3230

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2021 046170 A (DENSO CORP) 25. März 2021 (2021-03-25) | 1-3 | INV. B25D1/00 |
| Y | * Absätze [0018], [0020]; Abbildungen 1,2 * | 4-10 | H02M1/44 |
| | ----- | | |
| Y | JP 2009 060691 A (MURATA MANUFACTURING CO) 19. März 2009 (2009-03-19) * Absatz [0028] * | 4,5 | |
| | ----- | | |
| Y | GUERREIRO JOEL FILIPE ET AL: "Design Procedures and Prototyping of a Full-Bridge High Frequency Power Inverter", 2019 IEEE 15TH BRAZILIAN POWER ELECTRONICS CONFERENCE AND 5TH IEEE SOUTHERN POWER ELECTRONICS CONFERENCE (COBEP/SPEC), IEEE, 1. Dezember 2019 (2019-12-01), Seiten 1-6, XP033758132, DOI: 10.1109/COBEP/SPEC44138.2019.9065318 [gefunden am 2020-04-13] * Absatz A.1); Seite 2 * | 6,7 | |
| | ----- | | **RECHERCHIERTE SACHGEBIETE (IPC)** B25D H02M |
| Y | DE 10 2021 127681 A1 (MAKITA CORP [JP]) 28. April 2022 (2022-04-28) * Absatz [0045]; Abbildungen 1,2 * | 8-10 | |
| | ----- | | |

Der vorliegende Recherchenbericht wurde für alle Patentansprüche erstellt

| Recherchenort | Abschlußdatum der Recherche | Prüfer |
|---|---|---|
| München | 25. April 2025 | Schürle, Patrick |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 21 3230

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-04-2025

| Im Recherchenbericht angeführtes Patentdokument | Datum der Veröffentlichung | Mitglied(er) der Patentfamilie | Datum der Veröffentlichung |
|---|---|---|---|
| JP 2021046170 A | 25-03-2021 | JP 7327036 B2<br>JP 2021046170 A | 16-08-2023<br>25-03-2021 |
| JP 2009060691 A | 19-03-2009 | JP 5098522 B2<br>JP 2009060691 A | 12-12-2012<br>19-03-2009 |
| DE 102021127681 A1 | 28-04-2022 | CN 114498591 A<br>DE 102021127681 A1<br>JP 7500388 B2<br>JP 2022069991 A<br>US 2022131486 A1 | 13-05-2022<br>28-04-2022<br>17-06-2024<br>12-05-2022<br>28-04-2022 |

EPO FORM P0461

Für nähere Einzelheiten zu diesem Anhang : siehe Amtsblatt des Europäischen Patentamts, Nr.12/82